# EUROPÄISCHE PATENTANMELDUNG

(11) **EP 1 674 535 A1**
(43) Veröffentlichungstag der Anmeldung: **28.06.2006**
(21) Anmeldenummer: 05110308.3
(22) Anmeldetag: 03.11.2005
(51) Int. Cl.: C09D 5/00, C09D 7/12, C09K 3/18, B05D 5/08

(54) **Selbstreinigende Oberflächen mit durch hydrophobe strukturgebende Partikel und Wachspartikel gebildeten Erhebungen**

(30) Priorität: 27.12.2004 DE 102004062739
(71) Anmelder: DEGUSSA AG, 40474 Düsseldorf (DE)
(72) Erfinder: Nun, Edwin, 48727, Billerbeck (DE); Oles, Markus, 45525, Hattingen (DE)

(57) **Zusammenfassung**

Die vorliegende Erfindung betrifft selbstreinigende Oberflächen mit verbesserter mechanischer Stabilität und ein Verfahren zu deren Herstellung.

In der vorliegenden Erfindung wird dieses Ziel dadurch erreicht, dass selbstreinigende, hydrophobe, strukturierte Oberflächen hergestellt werden, die auf ihrer Oberfläche fixierte Mischungen von Partikeln aufweisen, die strukturgebende Partikel, ausgewählt aus Halbmetall- oder Metalloxiden, Kieselsäuren und Metallpulvern, und Wachspartikel aufweist.

Strukturierte Oberflächen, die durch solche Gemische von Partikeln strukturiert sind, zeichnen sich durch eine deutlich höhere mechanische Stabilität der Struktur aus und sind deshalb besonders gut zur Herstellung von selbstreinigenden Oberflächen geeignet, die höheren mechanischen Belastungen ausgesetzt werden, wie beispielsweise die Oberflächen von Zeltplanen, Markisen, Gewächshauselementen, Wintergärten oder LKW-Planen

## Beschreibung

Die vorliegende Erfindung betrifft selbstreinigende Oberflächen, die eine künstliche, zumindest teilweise hydrophobe Oberflächenstruktur aus Erhebungen aufweist, wobei die Erhebungen durch mittels eines Trägers auf der Oberfläche fixierte hydrophobe Partikel gebildet werden, mit einer verbesserten mechanischen Festigkeit, ein Verfahren zu deren Herstellung sowie deren Verwendung.

Gegenstände mit extrem schwer benetzbaren Oberflächen weisen eine Reihe von wirtschaftlich bedeutsamen Merkmalen auf. Das wirtschaftlich bedeutendste Merkmal ist dabei die selbstreinigende Wirkung von schwer benetzbaren Oberflächen, da die Reinigung von Oberflächen zeit- und kostenintensiv ist. Selbstreinigende Oberflächen sind somit von höchstem wirtschaftlichen Interesse. Haftmechanismen werden in der Regel durch grenzflächenenergetische Parameter zwischen den beiden sich berührenden Oberflächen bedingt. Dabei versuchen die Systeme ihre freie Grenzflächenenergie zu erniedrigen. Liegen die freien Grenzflächenenergien zwischen zwei Komponenten von sich aus schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr oft auf die Möglichkeiten der Wechselwirkungen an. So ist es beispielsweise beim Aufbringen von Wasser auf eine hydrophobe Oberfläche nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr hohem Kontaktwinkel. Perfluorierte Kohlenwasserstoffe, z.B. Polytetrafluorethylen, haben sehr niedrige Grenzflächenenergie. In zahlreichen Fällen ist aber eine Benetzung der Oberfläche durch Wasser nicht gewünscht. So führt eine Benetzung von Oberflächen durch Wasser oftmals dazu, dass nach dem Ablaufen Rückstände von gelösten oder suspendierten Feststoffen als hässliche Rückstände auf der Oberfläche zurückbleiben. Dieses Problem besteht insbesondere bei Oberflächen, die Regen- und Spritzwasser ausgesetzt sind.

Oberflächen, die durch Wasser schwer benetzbar sind, sind bekannt. Es ist bekannt, dass zur Erzielung eines guten Selbstreinigungseffektes die Oberfläche neben einer Hydrophobie auch eine mikrorauhe Oberflächenstruktur aufweisen muss. Bereits 1947 wurde in CH 268 258 A der Zusammenhang zwischen "feinkörniger" Oberfläche und hohem Kontaktwinkel beschrieben und die Analogie zur Kapuzinerkresse genannt. 1982 veröffentlichte A. A. Abramzon in Khimia i Zhizu, Ausgabe Nr. 11, Seiten 38 - 40, dass die Zusammenhänge von Rauigkeit und Hydrophobie, beispielsweise im Lotusblatt realisiert sind. Auf dem Lotusblatt sind Erhebungen kristalliner Art mit Feinstrukturen vorhanden, die bis zu einigen µm voneinander entfernt sind. Wassertropfen kommen im Wesentlichen also nur mit den Spitzen dieser Erhebungen in Berührung, so dass die Kontaktfläche zwischen Blattoberfläche und Wassertropfen winzig klein ist. Dies hat eine sehr niedrige Adhäsion des Wassertropfens zur Folge. In der Natur sind weitere solche Oberflächen z.B. von Blättern von Kapuzinerkresse, auf Ginkgoblättern oder auf Kohlrabi bekannt.

Aus US 3,354,022 sind wasserabstoßende Oberflächen bekannt, wobei die Oberfläche eine mikroraue Struktur mit Erhebungen und Vertiefungen aufweist und aus einem hydrophoben Material, insbesondere aus einem fluorhaltigem Polymer, gebildet ist. Insbesondere wird die Herstellung solcher Oberflächenstrukturen durch Aufprägen einer Struktur auf Wachs, Polymere oder wachsartige Verbindungen aufweisende Oberflächen. Weiterhin wird die Herstellung von Oberflächenstrukturen durch den Einsatz von Partikeln beschrieben, Zum einen werden Wachpartikel auf einer Oberfläche fixiert, zum anderen werden mit Wachs (Fluorkohlenwasserstoffwachs auf der Basis eines Fluoralkylethoxymethacrylatpolymeren) umhüllte Glaspartikel mittels eines geschmolzenen Wachses fixiert. Im ersten Fall wurden Partikel mit einer Größe von 5 bis 80 µm eingesetzt, im zweiten Fall wurden Glaspartikel von 3 bis 12 µm Durchmesser verwendet, die zu 15 bis 250 µm großen Partikeln agglomerierten. Ein großer Nachteil derartiger Beschichtungen mit Selbstreinigungseffekt ist deren geringe Abriebbeständigkeit.

Als Verbesserung der Abriebfestigkeit von geprägten Strukturen schlägt DE 101 38 036 eine geprägte Struktur vor, die zwischen den Erhebungen die Erhebungen verbindende Grate aufweist, die in der Mitte zwischen zwei durch sie verbundene Erhebungen eine Höhe aufweisen, die mindestens 10 % kleiner als die Höhe der Erhebungen ist. Durch diese Maßnahmen wird die Haltbarkeit solcher geprägten Strukturen deutlich erhöht. Üblicherweise beschränkt sich das Prägen und damit der Gegenstand aus DE 101 38 036 auf relativ weiche Materialien, wie z.B. Polymere, UV-härtende Lacke oder Wachse.

In DE 100 22 246 werden Partikel ebenfalls mit einem filmbildenden Bindemittel, insbesondere mit Wachsen an Oberflächen zur Erzeugung von strukturierten Oberflächen fixiert, wobei die Partikel von den filmbildenden Bindemitteln umschlossen bzw. benetzt werden. Wegen der eingesetzten Wachse als Bindemittel besteht auch bei diesem Verfahren das Problem, dass derartig erzeugte Beschichtungen mit Selbstreinigungseffekt eine relativ geringe Abriebbeständigkeit aufweisen.

In WO 96/04123 wird eine selbstreinigende Oberfläche von Gegenständen beschrieben, die eine künstliche Oberflächenstruktur besitzt, welche Erhebungen und Vertiefungen aufweist, wobei die Struktur mit einem Abstand zwischen den Erhebungen von 5 bis 200 µm und einer Höhe der Erhebungen von 5 bis 100 µm defmiert ist. Die Herstellung dieser Oberfläche erfolgt z.B. durch Aufbringen von feinstgemahlenem Teflon auf eine, mit Klebstoff behandelte Oberfläche, oder aber durch Aufprägen einer Struktur auf ein thermoplastisch verformbares hydrophobes Material. Durch das Fixieren der Partikel mit Klebstoff wird eine bessere mechanische Belastbarkeit der Struktur erzielt als bei der Fixierung mit Wachsen.

In DE 101 18 352 wird die Verwendung von Partikeln zur Erzeugung einer Oberflächenstruktur beschrieben, wobei Partikel eingesetzt werden sollen, die eine Feinstruktur im Nanometerbereich aufweisen. Durch die Feinstruktur im Nanometerbereich wird ein Aspektverhältnis (maximale Höhe durch maximale Breite der Erhebung) der Erhebungen auf den Partikeln von höher 1 erzielt, wie es sonst nur durch Prägen erzielt werden kann. Bei den bisher bekannten Verfahren, bei denen Partikel eingesetzt werden, die keine Struktur auf der Oberfläche aufweisen, kann ein solches Aspektverhältnis von größer 1 naturgemäß nicht erzielt werden, da bei einem kugelförmigen Partikel maximale Höhe und maximale Breite gleich sind. Die Fixierung der Partikel erfolgt in DE 101 18 352 durch die Verwendung von Trägersystemen wie z.B. Lacke oder Klebstoffe. So hergestellte Oberflächen weisen zwar einen besseren Selbstreinigungseffekt auf sind aber immer noch relativ anfällig gegen mechanische Beanspruchung der Struktur. Insbesondere durch Scheuern an anderen Oberflächen können die Partikel sehr schnell aus der Oberfläche herausgebrochen werden.

In DE 101 18 351 werden Gemische von Fixiermittelpartikeln und Partikeln mit einer Oberfläche mit Feinstruktur im Nanometerbereich eingesetzt, wobei die Fixiermittelpartikel ausgewählt sind aus Pulverlacken oder Schmelzklebern und die Fixierung durch ein kurzzeitiges Erwärmen erfolgt. Die so hergestellte Oberfläche zeigt zwar eine deutlich bessere Haltbarkeit der Partikel allerdings besteht bei diesem Verfahren die Gefahr, dass die Feinstruktur der Partikel durch Fixiermittelpartikel zugeschmiert wird.

Aufgabe der vorliegenden Erfindung war es deshalb die mechanische Stabilität von strukturierten Oberflächen zu Erhöhen, wobei eine auf den Partikeln selbst gegebenenfalls vorhandene Oberflächenstruktur erhalten bleiben soll.

Überraschenderweise wurde gefunden, dass durch die Verwendung von Gemischen von hydrophoben Metalloxidpartikeln und Wachspartikeln als Strukturbildner, die auf einer Oberfläche mittels eines Trägers fixiert werden die mechanische Stabilität der erzeugten Oberflächenstruktur deutlich erhöht wird. Möglicherweise kann dies damit erklärt werden, dass die Wachspartikel zwischen den Metalloxidpartikeln eine ähnlich stützende Wirkung entfalten wie die Grate in DE 101 38 036.

Gegenstand der vorliegenden Erfindung ist deshalb eine selbstreinigende Oberfläche, die eine künstliche, zumindest teilweise hydrophobe Oberflächenstruktur aus Erhebungen aufweist, wobei die Erhebungen durch eine mittels eines Trägers auf der Oberfläche fixierten Mischung von hydrophoben Partikeln gebildet werden, welche dadurch gekennzeichnet ist, dass die Mischung strukturgebende Partikel, ausgewählt aus Halbmetall- oder Metalloxiden, Kieselsäuren und Metallpulvern, und Wachspartikel aufweist.

Ebenso ist Gegenstand der vorliegenden Erfindung ein Verfahren zur Herstellung von selbstreinigenden Oberflächen, bei dem eine geeignete, zumindest teilweise hydrophobe Oberflächenstruktur durch Aufbringen und Fixieren eines Gemisches von hydrophoben Partikeln mittels eines Trägers auf einer Oberfläche geschaffen wird, welches dadurch gekennzeichnet ist, dass das Gemisch strukturbildende Partikel, ausgewählt aus Halbmetall- oder Metalloxiden, Metallpulvern und Kieselsäuren, und Wachspartikel aufweist.

Ebenfalls ist Gegenstand der vorliegenden Erfindung eine Partikelzusammensetzung, geeignet zur Herstellung von selbstreinigenden Oberflächen, die dadurch gekennzeichnet ist, dass die Zusammensetzung strukturgebende Partikel, ausgewählt aus Halbmetall- oder Metalloxiden, Kieselsäuren und Metallpulvern, und von 1 bis 75 Gew.-% Wachspartikel aufweist.

Außerdem ist Gegenstand der vorliegenden Erfindung die Verwendung des erfindungsgemäßen Verfahrens zur Herstellung von selbstreinigenden Oberflächen auf starren oder nicht starren Oberflächen von Gegenständen.

Durch das erfindungsgemäße Verfahren sind selbstreinigende Oberflächen zugänglich, die eine Oberflächenstruktur aus Erhebungen und damit auch Vertiefungen aufweist, wobei Erhebungen durch Partikel, die vorzugsweise eine zerklüftete Struktur im Nanometerbereich aufweisen, gebildet werden. Durch den Einsatz von Gemischen von strukturbildenden Partikeln und Wachspartikel, wird eine deutlich höhere Festigkeit der strukturierten Oberfläche in bezug auf mechanische Belastungen, wie z.B. Scheuern oder Kratzen erreicht.

Wie an Hand der Oberflächen gemäß Beispiel 1, auf der mittels eines Trägers eine Partikelmischung von 95 Gew.-% hydrophober pyrogener Kieselsäure und 5 % PTFEmodifizierten Polyethylenwachs, gezeigt werden konnte, ließ sich die maximale Scheuerbelastung von < 100 Zyklen auf > 2.000 Zyklen erhöhen.

Die Gemische sind mittels eines Trägers, insbesondere eines Lacks oder Klebstoffes fest an der Oberfläche fixiert. Der erfindungsgemäße Effekt ist vermutlich auf die Wachspartikel zurückzuführen. Diese übernehmen vermutlich die Funktion eines Stützkörpers, der die strukturgebenden Partikel gegen ein Umfallen und damit, bei nicht flexibler Befestigung an der Oberfläche durch den Träger, häufig gegen ein Abreißen sichert. Durch die in einem Wachs üblicherweise vorhandene Elastizität oder Plastizität können die Partikel dem Druck, der durch die mechanische Belastung auf die Struktur ausgeübt wird, in gewissen Grenzen ausweichen.

Trotz der Verwendung von Wachspartikeln bleibt bei dem vorliegenden erfindungsgemäßen Verfahren der positive Effekt, der durch den Einsatz von strukturgebenden Partikeln mit einer Feinstruktur im Nanometerbereich erhalten wird und der auf das Aspektverhältnis der Erhebungen im Nanometerbereich zurückzuführen ist, da durch die Fixierung über einen Kleber oder Lack die Wachspartikel oder Teile davon nicht die Feinstruktur verkleben. Dies liegt insbesondere daran, dass keine thermische Energie zur Fixierung angewendet werden muss und damit kein Aufschmelzen des Wachses auftreten kann, welches dann die Feinstruktur glättet.

Durch die Verwendung von Wachspartikeln, die hydrophobe Eigenschaften aufweisen, werden die selbstreinigenden Eigenschaften der erfindungsgemäßen Oberflächen nicht verschlechtert. Vielmehr kann, wenn kleine Wachspartikel als strukturgebende Partikel verwendet werden, in Abhängigkeit vom Mischungsverhältnis von Wachspartikel zu strukturgebenden Partikeln der Abstand der höchsten Erhebungen, die durch die strukturgebenden Partikel gebildet werden, sehr genau eingestellt werden, da üblicherweise nur eine Monolage von Partikeln auf der Oberfläche durch den Träger fixiert wird und somit der Abstand der höchsten Erhebungen zueinander durch die Anzahl der sie umgebenden Wachspartikel als nächste Nachbarn bestimmt wird.

Die vorliegende Erfindung wird im Folgenden beschrieben, ohne dass die Erfmdung auf die beschriebenen Ausführungsarten beschränkt sein soll. Im Sinne der vorliegenden Erfindung werden Substanzen, die zur Fixierung von Partikeln auf einer Oberfläche eingesetzt werden, als Träger bezeichnet.

Werden im nachfolgenden Text Bereichsangaben oder Vorzugsbereiche angegeben, so offenbaren diese auch alle möglichen Unterbereiche, die innerhalb dieser Bereiche oder Vorzugsbereiche gebildet werden können. Auf eine explizite Aufzählung aller möglicher Unterbereiche wird zu Gunsten der Verständlichkeit der Beschreibung deshalb verzichtet. Werden im nachfolgenden Text die Erfindungen, oder Merkmale davon, durch Aufzählungen oder Auswahlen von einzusetzenden Substanzen, Parametern oder Bedingungen offenbart, so gehören auch Teilmengen, die durch Streichen oder Disclaimen von einzelnen oder mehreren Substanzen, Parametern oder Bedingungen erhältlich sind, zum Offenbarungsgehalt der nachfolgenden Beschreibung. Auf eine explizite Beschreibung aller Ausführungen von möglichen Teilmengen, die durch Streichen oder Disclaimen erhalten werden können, wird zu Gunsten der Verständlichkeit der Beschreibung deshalb verzichtet.

Die erfindungsgemäßen selbstreinigende Oberflächen, die eine künstliche, zumindest teilweise hydrophobe Oberflächenstruktur aus Erhebungen aufweisen, wobei die Erhebungen durch eine mittels eines Trägers auf der Oberfläche fixierten Mischung von hydrophoben Partikeln gebildet werden, zeichnen sich dadurch aus, dass die Mischung strukturgebende Partikel, ausgewählt aus Halbmetall- oder Metalloxiden, Kieselsäuren und Metallpulvern, und Wachspartikel aufweist. Vorzugsweise weist das Gemisch von 1 bis 75 Gewichtsprozent, bevorzugt von 2 bis 70 Gewichtsprozent, besonders bevorzugt von 3 bis 60 Gewichtsprozent und ganz besonders bevorzugt von 5 bis 25 Gewichtsprozent an Wachspartikeln auf. Je nach Partikelgröße bzw. den Verhältnissen der Partikelgrößen von Wachspartikeln zu strukturgebenden Partikeln wird über das Volumenverhältnis wie oben beschrieben, der Abstand der durch die strukturgebenden Partikel gebildeten höchsten Erhebungen bestimmt, wenn wie bevorzugt eine Monolage von Partikeln Mittels des Trägers an der Oberfläche fixiert sind.

Die durch die hydrophoben Partikel gebildete Oberflächenstruktur mit selbstreinigenden Eigenschaften weist vorzugsweise Erhebungen mit einer mittleren Höhe von 20 nm bis 25 µm und einem mittleren Abstand von bis zu 25 µm, vorzugsweise mit einer mittleren Höhe von 50 nm bis 10 µm und/oder einem mittleren Abstand von bis zu 10 µm und ganz besonders bevorzugt mit einer mittleren Höhe von 50 nm bis 4 µm und/oder einen mittleren Abstand von bis zu 4 µm auf. Ganz besonders bevorzugt weisen die erfindungsgemäßen Oberflächen Erhebungen mit einer mittleren Höhe von 0,25 bis 1 µm und einem mittleren Abstand von kleiner 1 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels so stellt die Spitze des Kegels die höchste Erhebung der Erhebung dar. Handelt es sich bei der Erhebung um einen Quader, so stellte die oberste Fläche des Quaders die höchste Erhebung der Erhebung dar.

Neben dem Abstand der Erhebungen wird durch die Anzahl und Größe der vorhandenen Wachspartikel auch die Struktur der Oberfläche bestimmt. So weist eine Oberfläche, bei der 25 % der Partikel Wachspartikel sind und bei der die Wachspartikel das 0,5-fache der Größe der strukturbildenden Partikel aufwiest, eine Struktur auf, bei der jede vierte Erhebung 50 % niedriger ist als die Höhe der sie direkt umgebenden Erhebungen. Beträgt der Anteil der Wachspartikel 75 %, so weist jede vierte Erhebung eine Höhe auf, die um 100 % höher ist als die Höhe der Erhebungen der sie direkt umgebenden Nachbarn. Vorzugsweise weist die erfindungsgemäße Oberfläche eine Struktur auf, bei der jede zweite bis jede hundertste Erhebung eine Höhe aufweist, die um 50 % niedriger, vorzugsweise um 50 bis 10 % niedriger, bevorzugt um 30 bis 10 % niedriger ist als die Höhe der sie direkt umgebenden Nachbarn.

Die selbstreinigenden Eigenschaften der Oberflächenstruktur sind zurückzuführen auf die Benetzungseigenschaften, welche durch den Randwinkel, den ein Wassertropfen mit einer Oberfläche bildet, beschrieben werden. Ein Randwinkel von 0 Grad bedeutet dabei eine vollständige Benetzung der Oberfläche. Die Messung des statischen Randwinkels erfolgt in der Regel mittels Geräten, bei denen der Randwinkel optisch bestimmt wird. Auf glatten hydrophoben Oberflächen werden üblicherweise statische Randwinkel von kleiner 125 ° gemessen. Die vorliegenden Folien mit selbstreinigenden Oberflächen weisen statische Randwinkel von vorzugsweise größer 130 ° auf, bevorzugt größer 140 ° und ganz besonders bevorzugt größer 145 ° auf. Es wurde außerdem gefunden, dass eine Oberfläche nur dann gute selbstreinigende Eigenschaften aufweist, wenn diese eine Differenz zwischen Fortschreit- und Rückzugswinkel von maximal 10 ° aufweist, weshalb erfindungsgemäße Oberflächen vorzugsweise eine Differenz zwischen Fortschreit- und Rückzugswinkel von kleiner 10°, vorzugsweise kleiner 5° und ganz besonders bevorzugt kleiner 4° aufweisen. Für die Bestimmung des Fortschreitwinkels wird ein Wassertropfen mittels einer Kanüle auf die Oberfläche gesetzt und durch Zugabe von Wasser durch die Kanüle der Tropfen auf der Oberfläche vergrößert. Während der Vergrößerung gleitet der Rand des Tropfens über die Oberfläche und der Kontaktwinkel wird als Fortschreitwinkel optisch bestimmt. Der Rückzugswinkel wird an dem selben Tropfen gemessen, nur wird durch die Kanüle dem Tropfen Wasser entzogen und während des Verkleinerns des Tropfens der Kontaktwinkel optisch gemessen. Der Unterschied zwischen beiden Winkeln wird als Hysterese bezeichnet. Je kleiner der Unterschied ist, desto geringer ist die Wechselwirkung des Wassertropfens mit der Oberfläche der Unterlage und desto besser ist der Lotus-Effekt (die selbstreinigende Eigenschaft).

Die erfindungsgemäßen selbstreinigenden Oberflächen weisen außerdem einen Abrollwinkel von vorzugsweise kleiner 20°, bevorzugt kleiner 10° und besonders bevorzugt kleiner 3°auf. Als Abrollwinkel wird dabei der Neigungswinkel bestimmt, bei der ein 60 µl Tropfen Wasser, der auf eine horizontale Oberfläche aufgebracht wird, durch einseitiges Anheben der Oberfläche von der sich ausbildenden Schiefen Ebene selbstständig abrollt.

Die erfindungsgemäßen Oberflächen, die eine Oberflächenstruktur mit selbstreinigenden Eigenschaften aufweist, weist bevorzugt ein Aspektverhältnis der Erhebungen von größer 0,15 auf. Vorzugsweise weisen die Erhebungen, die durch die Partikel selbst gebildet werden, ein Aspektverhältnis von 0,3 bis 0,9 auf, besonders bevorzugt von 0,5 bis 0,8 auf. Das Aspektverhältnis ist dabei definiert als der Quotient von maximaler Höhe zur maximalen Breite der Struktur der Erhebungen.

Um die genannten Aspektverhältnisse zu erzielen ist es vorteilhaft, wenn zumindest ein Teil der Partikel, vorzugsweise mehr als 50 % der Partikel nur bis zu 90 % ihres Durchmessers in den Träger eingebettet sind. Die Oberfläche weist deshalb bevorzugt Partikel auf, die mit 10 bis 90 %, bevorzugt 20 bis 50 % und ganz besonders bevorzugt von 30 bis 40 % ihres mittleren Partikeldurchmessers in dem Träger verankert sind und damit mit Teilen ihrer zumindest teilweise inhärent zerklüfteten Oberfläche noch aus der Folie herausragen. Auf diese Weise ist gewährleistet, dass die Erhebungen, die durch die Partikel selbst gebildet werden, ein genügend großes Aspektverhältnis von vorzugsweise zumindest 0,15 aufweisen. Auf diese Weise wird außerdem erreicht, dass die fest verbundenen Partikel sehr haltbar mit der Oberfläche der Folie verbunden sind. Das Aspekt-Verhältnis ist hierbei definiert als das Verhältnis von maximaler Höhe zu maximaler Breite der Erhebungen. Ein als ideal kugelförmiger angenommener Partikel, der zu 70 % aus dem Träger herausragt weist gemäß dieser Definition ein Aspektverhältnis von 0,7 auf.

Bevorzugte hydrophobe, strukturgebende Partikel weisen einen Partikeldurchmesser von 0,02 bis 50 µm, besonders bevorzugt von 0,1 bis 25 µm und ganz besonders bevorzugt von 0,5 bis 10 µm auf. Geeignete Partikel können aber auch einen Durchmessern von kleiner als 500 nm aufweisen oder sich aus Primärteilchen zu Agglomeraten oder Aggregaten mit einer Größe von 0,2 bis 50 µm zusammenlagern.

Die strukturgebenden Partikel, die die Erhebungen auf der Oberfläche bilden, sind vorzugsweise ausgewählt aus Silikaten, Mineralien, Metalloxiden, Metallpulvern, Kieselsäuren, Pigmenten oder Polymeren, ganz besonders bevorzugt aus pyrogenen Kieselsäuren, Fällungskieselsäuren, Aluminiumoxid, Mischoxiden, dotierten Silikaten, Titandioxiden oder pulverförmige Polymeren.

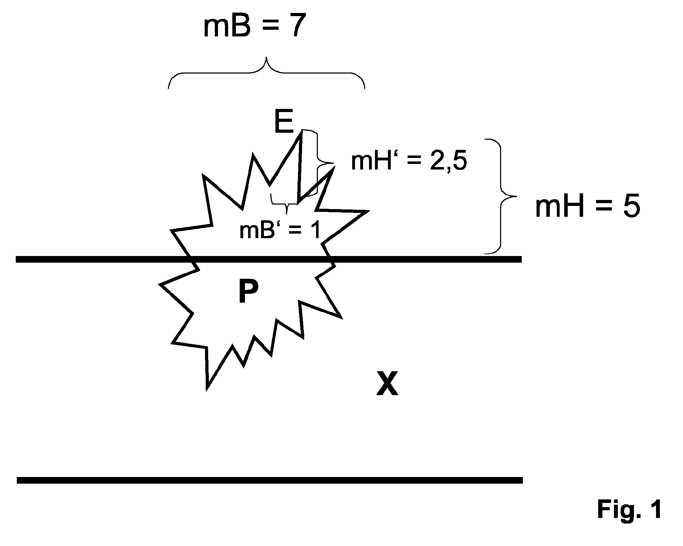

Besonders bevorzugte Mikropartikel, welche die Erhebungen der strukturierten Oberfläche bilden, sind solche, die eine unregelmäßige Feinstruktur im Nanometerbereich auf der Oberfläche aufweisen. Unter Feinstrukturen im Nanometerbereich, werden Strukturen verstanden, die Höhen, Breiten und/oder Abstände im Bereich von 1 bis 1000 nm aufweisen. Vorzugsweise weisen die Erhöhungen im Mittel eine Höhe von 20 bis 500 nm, bevorzugt von 50 bis 200 nm und besonders bevorzugt von 50 bis 150 nm auf. Der Abstand der Erhöhungen bzw. Vertiefungen auf den Partikeln beträgt vorzugsweise weniger als 500 nm, bevorzugt weniger als 200 nm, besonders bevorzugt von 25 bis 175 nm und ganz besonders bevorzugt von 50 bis 150 nm. Dabei weisen die Mikropartikel mit der unregelmäßigen Feinstruktur vorzugsweise Erhebungen bzw. Feinstrukturen mit einem Aspektverhältnis von größer 1, besonders bevorzugt größer 1,5 auf. Das Aspektverhältnis ist wiederum defmiert als Quotient aus maximaler Höhe zu maximaler Breite der Erhebung. In Fig. 1 wird der Unterschied der Erhebungen, die durch die Partikel gebildet werden und die Erhebungen, die durch die Feinstruktur gebildet werden schematisch verdeutlicht. Die Figur Fig. 1 zeigt die Oberfläche eines Flächenextrudates **X,** die Partikel **P** aufweist (Zur Vereinfachung der Darstellung ist nur ein Partikel abgebildet). Die Erhebung, die durch den Partikel selbst gebildet wird, weist ein Aspektverhältnis von ca. 0,71 auf, berechnet als Quotient aus der maximalen Höhe des Partikels **mH,** die 5 beträgt, da nur der Teil des Partikels einen Beitrag zur Erhebung leistet, der aus der Oberfläche des Flächenextrudates **X** herausragt, und der maximalen Breite **mB,** die im Verhältnis dazu 7 beträgt. Eine ausgewählte Erhebung der Erhebungen **E,** die durch die Feinstruktur der Partikel auf den Partikeln vorhanden sind, weist ein Aspektverhältnis von 2,5 auf, berechnet als Quotient aus der maximalen Höhe der Erhebung **mH',** die 2,5 beträgt und der maximalen Breite **mB',** die im Verhältnis dazu 1 beträgt. Besonders bevorzugte strukturgebende Partikel sind ausgewählt aus Partikeln von Aluminiumoxid, gefällter oder pyrogener Kieselsäure und weisen eine unregelmäßige Feinstruktur im Nanometerbereich an der Oberfläche auf.

Die erfindungsgemäße vorhandenen Wachspartikel weisen vorzugsweise ethylenisch ungesättigte Polymere, die auch fluoriert oder perfluoriert sein können, auf. Solche wachsartigen Verbindungen sind beispielsweise unter dem Handelsnamen COPO-WAX 4110 oder COPO-WAX 4125 (Coating Products) erhältlich. Dabei handelt es sich um Polytetrafluorethylen-modifizierte Polyethylenwachse. Reine Polyethylenwachse werden beispielsweise unter dem Handelsnamen VESTOWAX von der Degussa vertrieben, wie beispielsweise VESTOWAX PM 3016 V. Fluorierte Wachse sind z.B. unter den Bezeichnungen Zonyl (Du Pont) oder Dyneon TFM 1700 (Dyneon GmbH) erhältlich. Bevorzugte Wachspartikel weisen eine mittlere Partikelgröße auf, die das 0,5 bis 2-fache der mittleren Partikelgröße der strukturgebenden Partikel beträgt. Bevorzugte Wachspartikel weisen eine mittlere Partikelgröße auf, die das 0,5 bis 20-fache, vorzugsweise 0,5 bis 1-fache, besonders bevorzugt das 0,5 bis 0,9-fache und ganz besonders bevorzugt das 0,7 bis 0,8-fache der mittleren Partikelgröße der strukturgebenden Partikel auf. Es ist insbesondere vorteilhaft, wenn die Wachspartikel eine kleinere Partikelgröße aufweisen als die strukturgebenden Partikel. Dies ist insbesondere dann vorteilhaft, wenn das Zahlenverhältnis von Wachspartikeln zu strukturgebenden Partikeln kleiner oder gleich 1:1 beträgt, da in diesem Fall die Wachspartikel für einen Abstand der strukturgebenden Partikel zueinander sorgen, bei dem es vorteilhaft ist, dass die höchsten Erhebungen von den strukturgebenden Partikeln gestellt werden.
Der erfindungsgemäße vorhandene Träger, mit dem das Gemisch von Partikeln an der Oberfläche fixiert ist, ist vorzugsweise ein mittels thermischer Energie und/oder Lichtenergie gehärteter Lack oder Klebstoff, ein Zweikomponenten-Lack- oder Klebstoffsystem oder ein anderes reaktives Lack- oder Klebstoffsystem, wobei die Härtung vorzugsweise durch Polymerisation oder Vernetzung erfolgt. Besonders bevorzugt weist der gehärtete Lack Polymerisate und/oder Copolymerisate aus einfach und/oder mehrfach ungesättigten Acrylaten und/oder Methacrylaten oder Mischungen davon auf. Weitere Lacksysteme ergeben sich dem Fachmann. Die Mischungsverhältnisse können in weiten Grenzen variiert werden. Ebenso ist es möglich, dass der gehärtete Lack Verbindungen mit funktionellen Gruppen, wie z.B. Hydroxy-Gruppen, Epoxid-Gruppen, Amin-Gruppen, oder fluorhaltige Verbindungen, wie z.B. perfluorierte Ester der Acrylsäure, aufweist. Dies ist insbesondere dann vorteilhaft, wenn die Verträglichkeit von Lack und hydrophoben Partikeln wie beispielsweise von Aerosil R 8200 mittels N-[2-(Acryloyloxy)-ethyl]-N-ethylperfluoroctan-1-sulfonsäureamid aufeinander abgestimmt werden. Als Lacke sind nicht nur Lacke auf Acrylharz-Basis einsetzbar, sondern auch Lacke auf Polyurethan-Basis oder aber Lacke, die Polyurethanacrylate oder Siliconacrylate aufweisen.

Die erfindungsgemäßen Oberflächen sind vorzugsweise erhältlich durch ein Verfahren zur Herstellung von selbstreinigenden Oberflächen, bei dem eine geeignete, zumindest teilweise hydrophobe Oberflächenstruktur durch Fixieren eines Gemisches von hydrophoben Partikeln mittels eines Trägers auf einer Oberfläche geschaffen wird, welches sich dadurch auszeichnet, dass das Gemisch strukturbildende Partikel, ausgewählt aus Halbmetall- oder Metalloxiden, Metallpulvern und Kieselsäuren, und Wachspartikel aufweist. Die eingesetzten strukturgebenden Partikel können ausgewählt sein aus solchen Partikeln, wie sie oben beschrieben wurden. Bevorzugt werden auch bei dem erfmdungsgemäßen Verfahren solche strukturbildende Partikel ausgewählt aus Aluminiumoxid, gefällter oder pyrogener Kieselsäure eingesetzt, die eine Feinstruktur im Nanometerbereich aufweisen. Besonders bevorzugt Partikel sind dabei pyrogene Kieselsäuren, wie sie z.B. unter den Namen Aerosil® VPR 411, Aerosil® R202, Aerosil® VPLE 8241 oder Aerosil® R 812S von der Degussa AG erhalten werden können. Die Feinstruktur ist dabei wie oben beschrieben definiert. Die vorzugsweise verwendeten Kieselsäuren weisen vorzugsweise eine Dibutylphthalat-Adsorbption, angelehnt an DIN 53 601, von 100 bis 350 ml/100 g, bevorzugt von 250 bis 350 ml/100 g auf. Als strukturgebende Partikel werden vorzugsweise solche eingesetzt, die eine mittlere Partikelgröße von 20 nm bis 50 µm aufweisen.

Die strukturgebenden Partikel können selbst hydrophob sein, wie z.B. PTFE aufweisende Partikel, oder die eingesetzten Partikel können hydrophobiert worden sein. Das Hydrophobieren der Partikel kann auf eine dem Fachmann bekannte Weise erfolgen. Typische hydrophobierte Partikel sind z.B. Kieselsäure-Pulver wie z.B. Aerosil R 8200 (Degussa AG), die käuflich zu erwerben sind.

Als Wachspartikel werden bevorzugt solche eingesetzt, die den oben genannten Bedingungen genügen., insbesondere solche, die eine mittlere Partikelgröße aufweisen, die das 0,5 bis 20-fache der mittleren Partikelgröße der strukturgebenden Partikel beträgt. Als Wachspartikel werden bevorzugt solche eingesetzt, die ethylenisch ungesättigte Polymere, die gegebenenfalls auch fluoriert oder perfluoriert sein können, aufweisen.

Vorzugsweise weist das eingesetzte Gemisch von 1 bis 75 Gewichtsprozent, bevorzugt von 2 bis 70 Gewichtsprozent, besonders bevorzugt von 3 bis 60 Gewichtsprozent und ganz besonders bevorzugt von 4 bis 50 , bevorzugt von 5 bis 25 Gewichtsprozent an Wachspartikeln auf. Das Partikelgemisch kann durch einfaches Trockenmischen der Partikel erhalten werden. Bevorzugt werden temperaturneutrale, intensiv mischende Apparate wie Taumelmischer. Weitere geeignete Apparate sind dem Fachmann bekannt.

Das erfindungsgemäße Verfahren weist vorzugsweise die Schritte
- Aufbringen einer härtbaren Substanz als Träger auf eine Oberfläche,
- Aufbringen des Gemischs von Partikeln auf den Träger und
- Fixieren der Partikel durch Härten des Trägers,
auf.

Das Aufbringen der härtbaren Substanz kann z.B. durch Aufsprühen, Aufrakeln, Aufstreichen oder Aufspritzen erfolgen. Vorzugsweise wird die härtbare Substanz in einer Dicke von 1 bis 100 µm, vorzugsweise in einer Dicke von 5 bis 50 µm aufgebracht. Je nach Viskosität der härtbaren Substanz kann es vorteilhaft sein, die Substanz vor dem Aufbringen der Partikel anhärten bzw. antrocknen zu lassen. Idealerweise wird die Viskosität der härtbaren Substanz so gewählt, dass die aufgebrachten Partikel zumindest teilweise in die härtbare Substanz einsinken können, die härtbare Substanz bzw. die auf ihr aufgebrachten Partikel aber nicht mehr verlaufen, wenn die Oberfläche senkrecht gestellt wird.

Das Aufbringen der Partikel kann durch gängige Verfahren wie Aufsprühen oder Bepudern erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an der härtbaren Substanz haften, durch Schütteln, Abbürsten oder Abblasen von der Oberfläche entfernt werden. Diese Partikel können gesammelt und wieder eingesetzt werden.

Als härtbare Substanz (Träger) kann z.B. ein Lack oder Klebstoff, der zumindest Mischungen aus einfach und/oder mehrfach ungesättigten Acrylaten und/oder Methacrylaten und/oder Polyurethane und/oder Silikonacrylate und/oder Urethanacrylate, sowie weitere, sich dem Fachmann eröffnende Systeme, aufweist, bevorzugt Mischungen aus einfach und/oder mehrfach ungesättigten Acrylaten und/oder Methacrylaten aufweist, eingesetzt werden. Die Mischungsverhältnisse können in weiten Grenzen variiert werden. Besonders bevorzugt wird ein mittels thermischer oder chemischer Energie und/oder Lichtenergie härtbarer Lack oder Klebstoff eingesetzt.

Vorzugsweise wird als härtbare Substanz ein Lack/Klebstoff oder ein Lack- oder Klebstoffsystem ausgewählt, das hydrophobe Eigenschaften aufweist, da die eingesetzten Partikel ebenfalls hydrophobe Eigenschaften aufweisen und nur so ein anhaften der Partikel des Partikelgemisches gewährleistet werden kann.

Es kann vorteilhaft sein, wenn die als Lack/Klebstoff eingesetzten Mischungen Verbindungen mit funktionellen Gruppen, wie z.B. Hydroxy-Gruppen, Epoxid-Gruppen, Amin-Gruppenoder fluorhaltige Verbindungen, wie z.B. perfluorierte Ester der Acrylsäure, aufweist. Dies ist insbesondere dann vorteilhaft, wenn die Verträglichkeit (in Bezug auf die hydrophoben Eigenschaften) von Lack und hydrophoben Partikeln wie beispielsweise von Aerosil VPR 411 mittels N-[2-(Acryloyloxy)-ethyl]-N-ethylperfluoroctan-1-sulfonsäureamid aufeinander abgestimmt werden. Als härtbare Substanzen können nicht nur Lacke auf Acrylharz-Basis eingesetzt werden, sondern auch Lacke auf Polyurethan-Basis, oder aber Polyurethanacrylate oder Siliconacrylate. Ebenfalls sind als härtbare Substanzen Zweikomponentenlacksysteme oder andere reaktive Lacksysteme einsetzbar.

Das Fixieren der Partikel auf dem Träger erfolgt durch Härten des Trägers, wobei dieses, je nach verwendetem Lack- oder Klebstoffsystem, vorzugsweise durch thermische und/oder chemische Energie und/oder Lichtenergie erfolgt. Das Härten des Trägers, ausgelöst durch chemische oder thermische Energie und/oder Lichtenergie, kann z.B. durch Polymerisation oder Vernetzung der Bestandteile der Lacke/Klebstoffe bzw. Lack- oder Klebstoffsysteme erfolgen. Besonders bevorzugt erfolgt das Härten des Trägers durch Lichtenergie und ganz besonders bevorzugt erfolgt das Polymerisieren des Trägers durch Licht einer Hg-Mitteldrucklampe im UV-Bereich. Vorzugsweise erfolgt das Härten des Trägers unter einer Inertgas-Atmosphäre, ganz besonders bevorzugt unter einer Stickstoffatmosphäre.

Je nach Dicke der aufgebrachten härtbaren Substanz und Durchmesser der verwendeten Partikel kann es notwendig sein, die Zeit, die zwischen Aufbringen der Partikel und Härten der härtbaren Substanz verstreicht, zu begrenzen, um ein vollständiges Eintauchen der Partikel in die härtbare Substanz zu vermeiden. Vorzugsweise wird die härtbare Substanz innerhalb von 0,1 bis 10 min, vorzugsweise innerhalb von 1 bis 5 min nach dem Aufbringen der Partikel gehärtet.

In dem erfindungsgemäßen Verfahren werden bevorzugt Partikelzusammensetzungen, geeignet zur Herstellung von selbstreinigenden Oberflächen eingesetzt, die dadurch gekennzeichnet sind, dass die Zusammensetzung hydrophobe, strukturgebende Partikel, ausgewählt aus Metalloxiden, Kieselsäuren und Metallpulvern, und von 1 bis 75 Gew.-%, vorzugsweise von 2 bis 70 Gew.-%, bevorzugt von 3 bis 60 Gew.-% und besonders bevorzugt von 4 bis 50 Gew.-%, bevorzugt von 5 bis 25 Gew.-% von Wachspartikeln aufweist. Besonders bevorzugt weist die Zusammensetzung strukturgebende Partikel auf, die eine Feinstruktur im Nanometerbereich aufweisen und die ausgewählt sind aus Partikeln von Aluminiumoxid oder gefällter oder pyrogener Kieselsäure.

Es kann vorteilhaft sein, die erfindungsgemäß hergestellte Oberfläche nach dem Fixieren der Partikel auf dem Träger mit einem Material zu behandeln, welches die Oberfläche mit hydrophoben Eigenschaften ausrüstet. Dies kann z.B. dadurch erfolgen, dass die die hydrophoben Partikel aufweisende Oberfläche mit zumindest einer Verbindung aus der Gruppe der Alkylsilane, der Perfluoralkylsilane, die z.B. bei der Degussa AG zu beziehen sind, behandelt wird. mit hydrophoben Eigenschaften ausgestattet werden. Vorzugsweise erfolgt die Behandlung dadurch, dass die hydrophobe strukturbildende Partikel aufweisende Oberfläche, die zusätzlich hydrophobiert werden soll, in eine Lösung, die ein Hydrophobierungsreagenz wie z.B. Alkylsilane aufweist, getaucht wird, überschüssiges Hydrophobierungsreagenz abgetropft wird und die Oberfläche bei einer möglichst hohen Temperatur getempert. Die maximal anwendbare Temperatur ist durch die Erweichungstemperaturen von Träger oder Substrat limitiert.

Das erfindungsgemäße Verfahren kann hervorragend zur Herstellung von selbstreinigenden Oberflächen auf planaren oder nichtplanaren Gegenständen, insbesondere auf nichtplanaren Gegenständen verwendet werden. Dies ist mit den herkömmlichen Verfahren nur eingeschränkt möglich. Insbesondere über Verfahren, bei denen vorgefertigte Filme auf eine Oberfläche aufgebracht werden oder bei Verfahren, bei denen eine Struktur durch Prägen erstellt werden soll, sind nichtplanare Gegenstände, wie z.B. Skulpturen, nicht oder nur eingeschränkt zugänglich. Naturgemäß kann das erfmdungsgemäße Verfahren aber auch zur Herstellung von selbstreinigenden Oberflächen auf Gegenständen mit planaren Oberflächen, wie z.B. Gewächshäusern oder Verkehrsmitteln, insbesondere Kraftfahrzeugen verwendet werden. Insbesondere die Anwendung des erfmdungsgemäßen Verfahrens zur Herstellung von selbstreinigenden Oberflächen an Gewächshäusern weist Vorteile auf, da mit dem Verfahren selbstreinigende Oberflächen z.B. auch auf transparenten Materialien wie Glas oder Plexiglas® hergestellt werden können und die selbstreinigende Oberfläche zumindest soweit transparent ausgebildet werden kann, dass für das Wachstum der Pflanzen im Gewächshaus genügend Sonnenlicht durch die mit einer selbstreinigenden Oberfläche ausgerüstete transparente Oberfläche dringen kann. Im Gegensatz zu herkömmlichen Gewächshäusern, die regelmäßig von Laub-, Staub-, Kalk- und biologischem Material, wie z.B. Algen, gereinigt werden müssen, können Gewächshäuser, die eine erfindungsgemäße Oberfläche aufweisen, mit längeren Reinigungsintervallen betrieben werden. Durch die gegebene erhöhte mechanische Belastbarkeit können solche Gewächshäuser oder Wintergärten begangen werden, was sowohl bei der Errichtung selbiger als auch bei Reparaturen oder Reinigungsarbeiten von heruntergebrochenem Astwerk vorteilhaft ist.

Das erfindungsgemäße Verfahrens kann außerdem zur Herstellung von selbstreinigenden Oberflächen auf nicht starren Oberflächen von Gegenständen, verwendet werden, wie z.B. Schirmen oder anderen Oberflächen die flexibel gehalten sind. Ganz besonders bevorzugt kann das erfindungsgemäße Verfahren zur Herstellung selbstreinigender Oberflächen auf flexiblen oder unflexiblen Wänden im Sanitärbereich verwendet werden. Solche Wände können z.B. Trennwände in öffentlichen Toiletten, Wände von Duschkabinen, Schwimmbädern oder Saunen, aber auch Duschvorhänge (flexible Wand) sein.

Die vorliegende Erfindung wird an Hand der Figur Fig. 1 näher erläutert, ohne dass die Erfindung auf diese Ausführungen beschränkt sein soll.

Die Figur Fig. 1 zeigt schematisch die Oberfläche einer erfindungsgemäß beschichteten Oberfläche, das Partikel **P** aufweist (Zur Vereinfachung der Darstellung ist nur ein Partikel abgebildet). Die Erhebung, die durch den Partikel selbst gebildet wird, weist ein Aspektverhältnis von ca. 0,71 auf, berechnet als Quotient aus der maximalen Höhe des Partikels **mH,** die 5 beträgt, da nur der Teil des Partikels, der aus der Oberfläche des Trägermaterials **X** herausragt, einen Beitrag zur Erhebung leistet, und der maximalen Breite **mB,** die im Verhältnis dazu 7 beträgt. Eine ausgewählte Erhebung **E** der Erhebungen, die durch die Feinstruktur der Partikel auf den Partikeln vorhanden ist, weist ein Aspektverhältnis von 2,5 auf, berechnet als Quotient aus der maximalen Höhe der Erhebung **mH',** die 2,5 beträgt und der maximalen Breite **mB',** die im Verhältnis dazu 1 beträgt.

Die nachfolgenden Beispiele sollen die erfindungsgemäßen Oberflächen bzw. das Verfahren zur Herstellung der Oberflächen näher erläutern, ohne dass die Erfindung auf diese Ausfuhrungsarten beschränkt sein soll.

### Beispiel 1:

Auf Platten aus Polymethylmethacrylat wurde eine 25 µm Dicke Lackschicht eines UV-härtenden Acrylatlackes, hergestellt aus einer Mischung von drei Gewichtsteilen Hexandioldiacrylat und 2 Gewichtsteilen Pentaerythrittetraacrylat, dem bezogen auf diese Mischung zusätzlich 10 Massen-% Plex 4092 F der Firma Röhm, 10 Massen-% Methylmethacrylat, 10 Massen-% 2-Hydroxyethylmethacrylat sowie 2 Massen-% Darocur 1173 (Ciba Spezialitätenchemie) als Härter beigegeben wurde, mittels eines Rakel zu 25 µm aufgetragen. Auf die noch feuchte Lackschicht wurde mit einem elektrostatischen Sprühsystem der Firma Nordson ein Gemisch von 95 Massen-% pyrogener hydrophobierter Kieselsäure (Aerosil VPLE 8241, Degussa AG) und 5 Massen-% eines pulverförmigen Waches (siehe Tabelle 1) aufgetragen. Nach dem UV-Härten des Lacks wurden die erhaltenen Oberflächen in Bezug auf ihre selbstreinigenden Eigenschaften beurteilt. Es konnte festgestellt werden, dass ein Wassertropfen von 20 µl von allen behandelten Platten bei einem geringen Neigungswinkel selbständig abrollten (abperlten). +++ bedeutet, dass ein geringer Neigungswinkel von < 10° (geschätzt) zum Abrollen des Tropfens führt. +++! wird als Beurteilung vergeben, wenn praktisch keine Wechselwirkung zwischen Oberfläche und Tropfen festgestellt werden kann. Auf so beurteilten Oberflächen rollt ein Tropfen schon beim vorsichtigen Anstoßen des Trägers ab.

Anschließend wurde die Abrasionsbeständigkeit überprüft. Dies erfolgte dadurch, dass nach einer Anzahl von 10, 20, 30, 50, 150 und 200 Zyklen wiederum die selbstreinigenden Eigenschaften getestet wurden. Die Abrasionstests wurden solange durchgeführt, bis eine Benetzung der getesteten Stelle der behandelten PMMA-Platte durch Wasser erfolgte und der Wassertropfen auch bei einem Winkel von 90° zur Horizontalen nicht ablief. Als Benetzung wurde bezeichnet, wenn ein aufgebrachter Wassertropfen (20 µl) auf der Oberfläche spreizte. Der Abrasionstest wurde mit einem rotierenden runden PET-Vlies von 250 g/m² und von 2 cm Durchmesser, welches mit einem Gewicht von 611 g belastet war, durchgeführt.
Die nachfolgende Tabelle 1 gibt eine Aufstellung der eingesetzten Kieselsäure/Wachspartikel Mischungen sowie die Ergebnisse der Abrasionstests wieder. Nach 10, 20 und 30 Rotationszyklen konnte noch keine Verschlechterung der selbstreinigenden Eigenschaften festgestellt werden.

**Tabelle 1**

| **Versuch Nr.** | **Wachs/Hersteller** | **Verhalten eines Wassertropfens nach einer bestimmten Anzahl von Zyklen** | | | | **Benetzung nach Anzahl von Abrasionszyklen** |
|---|---|---|---|---|---|---|
| | | **50 Zyklen** | **100Zyklen** | **150 Zyklen** | **200 Zyklen** | |
| 1 | **Copo-Wax 4110/ Coating Products** | Perlt ab | perlt ab | teilw.benetzt | Benetzt | **200** |
| 2 | **Copo-Wax 4125/ Coating Products** | Perlt ab | Perlt ab | teilw.benetzt | Benetzt | **200** |
| 3 | **Copo-Wax 2110/ Coating Products** | Perlt ab | Teilw.benetzt | teilw.benetzt | Benetzt | **200** |
| 4 | **Vestowax X 4118/ Degussa AG** | Perlt ab | Benetzt | | | **100** |
| 5 | **Vestowax FM 1012/ Degussa AG** | Perlt ab | Benetzt | | | **100** |
| 6 | **Vestowax A 616 SF/ Degussa AG** | Benetzt | | | | **50** |
| 7 | **Zonyl/ Du Pont** | Perlt ab | Benetzt | | | **100** |
| 8 | **Ohne** | Perlt ab | Benetzt | | | **50** |

### Beispiel 2:

Auf Platten aus Polymethylmethacrylat wurde mittels eines Filmziehrahmens eine 25 µm dicke Schicht aus einem UV-härtenden acrylischen Lacksystem gemäß Beispiel 1, welches zusätzlich noch bezogen auf die Mischung 2 Massen-% des Verlaufshilfsmittels BYK 3700 (BYK) aufweist, aufgetragen. Auf die noch feuchte Lackschichten wurden von Hand über ein "Teesieb"verschiedene Partikelmischungen aufgestreut. Die Partikelmischungen wurden durch Vermischen von 2 g pyrogener hydrophobierter Kieselsäure (Aerosil VPLE 8241, Degussa AG) mit Wachspartikeln Copo-Wax 4110 oder Copo-Wax 4125 in der in Tabelle 2 angegebenen Menge in einem 30 ml Fläschchen mittels eines Magnetrührers erhalten. Durch Abklopfen wurden überschüssige Partikel von der Oberfläche entfernt. Nach dem UV-Härten des Lacks und wurden die erhaltenen Platten bzw. deren Oberflächen in Bezug auf ihre selbstreinigenden Eigenschaften wie zuvor beurteilt.

**Tabelle 2**

| Versuch | Wachs | Zuschlag an Aerosil (%) | Bemerkung | Lotuseffekt |
|---|---|---|---|---|
| 8 | Copo-Wax 4110 | 5 | | +++! |
| 9 | Copo-Wax 4110 | 10 | | +++! |
| 10 | Copo-Wax 4110 | 50 | | +++! |
| 11 | Copo-Wax 4110 | Reines Wachs | Auftrag unregelmäßig da Partikel verklumpen | +++ |
| 12 | Copo-Wax 4125 | 5 | | +++! |
| 13 | Copo-Wax 4125 | 10 | | +++! |
| 14 | Copo-Wax 4125 | Reines Wachs | Auftrag unregelmäßig da Partikel verklumpen | +++ |
| 15 | Kein Wachs | Reines Aerosil | | +++! |

Wie den in der Tabelle 2 aufgelisteten Ergebnissen entnommen werden kann, zeigten alle Platten bzw. Oberflächen einen guten Lotuseffekt. Eine Beeinträchtigung des Lotus-Effektes durch die Wachspartikel konnte nicht beobachtet werden, außer für den Fall, dass nur Wachspartikel eingesetzt wurde. In diesem Fall wurde eine leichte Verschlechterung der Eigenschaften beobachtet.

## Patentansprüche

1. Selbstreinigende Oberfläche, die eine künstliche, zumindest teilweise hydrophobe Oberflächenstruktur aus Erhebungen aufweist, wobei die Erhebungen durch eine mittels eines Trägers auf der Oberfläche fixierten Mischung von hydrophoben Partikeln gebildet werden,
**dadurch gekennzeichnet,**
**dass** die Mischung strukturgebende Partikel, ausgewählt aus Halbmetall- oder Metalloxiden, Kieselsäuren und Metallpulvern, und Wachspartikel aufweist.

2. Selbstreinigende Oberfläche gemäß Anspruch 1,
**dadurch gekennzeichnet,**
**dass** der Träger ein mittels thermischer oder chemischer Energie oder Lichtenergie gehärteter Lack oder Klebstoff ist.

3. Selbstreinigende Oberfläche nach einem der Ansprüche 1 oder 2,
**dadurch gekennzeichnet,**
**dass** der Träger als gehärteten Lack Mischungen aus einfach und/oder mehrfach ungesättigten Acrylaten und/oder Methacrylaten oder Polyurethan aufweist.

4. Selbstreinigende Oberfläche nach zumindest einem der Ansprüche 1 bis 3,
**dadurch gekennzeichnet,**
**dass** die strukturgebenden Partikel eine mittlere Partikelgröße von 20 nm bis 50 µm aufweisen.

5. Selbstreinigende Oberfläche gemäß Anspruch 4,
**dadurch gekennzeichnet,**
**dass** die strukturgebenden Partikel ausgewählt sind aus Aluminiumoxid, gefällter oder pyrogener Kieselsäure und eine Feinstruktur im Nanometerbereich aufweisen.

6. Selbstreinigende Oberfläche gemäß zumindest einem der Ansprüche 1 bis 5,
**dadurch gekennzeichnet,**
**dass** die Wachspartikel eine mittlere Partikelgröße aufweisen, die das 0,5 bis 20-fache der mittleren Partikelgröße der strukturgebenden Partikel beträgt.

7. Selbstreinigende Oberfläche gemäß Anspruch 6,
**dadurch gekennzeichnet,**
**dass** das Gemisch von 1 bis 75 Gewichtsprozent an Wachspartikeln aufweist.

8. Verfahren zur Herstellung von selbstreinigenden Oberflächen, bei dem eine geeignete, zumindest teilweise hydrophobe Oberflächenstruktur durch Fixieren eines Gemisches von hydrophoben Partikeln mittels eines Trägers auf einer Oberfläche geschaffen wird,
**dadurch gekennzeichnet,**
**dass** das Gemisch strukturbildende Partikel, ausgewählt aus Halbmetall- oder Metalloxiden, Metallpulvern und Kieselsäuren, und Wachspartikel aufweist.

9. Verfahren gemäß Anspruch 8,
**dadurch gekennzeichnet,**
**dass** strukturbildende Partikel ausgewählt aus Aluminiumoxid, gefällter oder pyrogener Kieselsäure eingesetzt werden, die eine Feinstruktur im Nanometerbereich aufweisen.

10. Verfahren gemäß Anspruch 8 oder 9,
**dadurch gekennzeichnet,**
**dass** es die Schritte
a) Aufbringen einer härtbaren Substanz als Träger auf eine Oberfläche,
b) Aufbringen des Gemischs von Partikeln auf den Träger und
c) Fixieren der Partikel durch Härten des Trägers,
aufweist.

11. Verfahren nach Anspruch 10,
**dadurch gekennzeichnet,**
**dass** das Härten des Trägers durch thermische oder chemische Energie und/oder Lichtenergie erfolgt.

12. Verfahren gemäß Anspruch 10 oder 11,
**dadurch gekennzeichnet,**
**dass** als härtbare Substanz ein Lack der zumindest Mischungen aus einfach und/oder mehrfach ungesättigten Acrylaten und/oder Methacrylaten und/oder Polyurethane und/oder Silikonacrylate und/oder Urethanacrylate aufweist, eingesetzt wird.

13. Verfahren gemäß Anspruch 12,
**dadurch gekennzeichnet,**
**dass** als härtbare Substanz ein Lack ausgewählt wird der hydrophobe Eigenschaften aufweist.

14. Verfahren gemäß zumindest einem der Ansprüche 8 bis 13,
**dadurch gekennzeichnet,**
**dass** strukturgebende Partikel eingesetzt werden, die eine mittlere Partikelgröße von 20 nm bis 50 µm aufweisen.

15. Verfahren gemäß zumindest einem der Ansprüche 8 bis 14,
**dadurch gekennzeichnet,**
**dass** Wachspartikel eingesetzt werden, die eine mittlere Partikelgröße aufweisen, die das 0,5 bis 20-fache der mittleren Partikelgröße der strukturgebenden Partikel beträgt.

16. Verfahren gemäß zumindest einem der Ansprüche 8 bis 15,
**dadurch gekennzeichnet,**
**dass** das eingesetzte Gemisch von Partikeln von 1 bis 75 Gewichtsprozent an Wachspartikeln aufweist.

17. Verfahren gemäß Anspruch 16,
**dadurch gekennzeichnet,**
**dass** Wachspartikel eingesetzt werden, die ethylenisch ungesättigte Polymere, die gegebenenfalls auch fluoriert oder perfluoriert sein können, aufweisen.

18. Partikelzusammensetzung geeignet zur Herstellung von selbstreinigenden Oberflächen,
**dadurch gekennzeichnet,**
**dass** die Zusammensetzung strukturgebende Partikel, ausgewählt aus Halbmetall- oder Metalloxiden, Kieselsäuren und Metallpulvern, und von 1 bis 75 Gew.-% Wachspartikel aufweist.

19. Verwendung des Verfahrens gemäß zumindest einem der Ansprüche 8 bis 17, zur Herstellung von selbstreinigenden Oberflächen auf starren oder nicht starren Oberflächen von Gegenständen.
